# EUROPÄISCHE PATENTSCHRIFT

(11) **EP 1 332 703 B1**
(45) Veröffentlichungstag und Bekanntmachung des Hinweises auf die Patenterteilung: **30.11.2005**
(21) Anmeldenummer: 03001293.4
(22) Anmeldetag: 22.01.2003
(51) Int. Cl.: A47J 37/07

(54) **Kohlegrill**
Charcoal barbecue
Barbecue à charbon

(30) Priorität: 26.01.2002 DE 10203040
(43) Veröffentlichungstag der Anmeldung: 06.08.2003
(73) Patentinhaber: Deininger, Walter, 85107 Baar-Ebenhausen (DE)
(72) Erfinder: Deininger, Walter, 85107 Baar-Ebenhausen (DE)
(74) Vertreter: Liebl, Thomas

(56) Entgegenhaltungen:
- EP-A- 0 966 911
- DE-A- 2 949 085
- US-A- 5 823 174

## Beschreibung

Die Erfindung betrifft einen Kohlegrill nach dem Oberbegriff des Anspruchs 1.

Kohlegrills, insbesondere Holzkohlegrills sind allgemein bekannt und in der Regel in Kaminbauweise ausgeführt, um ein schnelles Anheizen zu erreichen und um eine Temperaturregelung vornehmen zu können. Nachteilig ist hierbei, dass bei dieser Ausführungsart der aufsteigende Luftstrom relativ gering ist und zudem der brennenden Holzkohle nur wenig Sauerstoff zugeführt wird. Regelmäßig ist dabei die Grillkohle horizontal unterhalb einem darüber angeordneten Grillrost angeordnet, auf dem sich das Grillgut befindet. Das Grillgut benötigt hier eine relativ lange Zeit, um gar zu werden, insbesondere bei z. B. größeren Fleischstücken. Auch erfordert die Reinigung dieser Grillgeräte umständliche und unbequeme Arbeiten.

Eine konkrete Ausführungsform eines derartigen Grills ist aus der DE 33 02 838 A1 bekannt, in der ein transportabler Kohlegrill beschrieben wird, der zum Transportieren zusammenklappbar ist. An einem wannenartigen Grillgehäuse ist hier ein U-förmiges Windblech angeordnet, in das ein Grillrost einsetzbar ist. Am Grillgehäuse sind ferner Füße vorgesehen.

Weiter ist aus der DE 199 26 945 A1 ein Kohlegrill bekannt, der eine doppelwandige Bodenkonstruktion aufweist, wobei in der oberen Bodenwand, auf der die Grillkohle aufliegt, Luftaustrittsöffnungen ausgebildet sind. Mit einem Ventilator als Luftzuführeinrichtung kann bei Bedarf über einen Luftkanal Luft in die doppelwandige Bodenkonstruktion eingeblasen werden, so dass die Luft durch die Luftaustrittsöffnungen zur Grillkohle gelangt. Der Luftkanal ist seitlich oder im Bereich der unteren Bodenwand, d. h. am Randbereich mit der doppelwandigen Bodenkonstruktion verbunden. Zum Austragen von durch die Luftaustrittsöffnungen in den doppelwandigen Bodenbereich fallender Asche ist im seitlichen Bodenwandbereich eine Austragsöffnung vorgesehen. Die doppelwandige Bodenkonstruktion ist so ausgebildet, dass sie auch in bestehende herkömmliche Kohlegrills eingesetzt werden kann. Durch einen so ausgebildeten Kohlegrill soll erreicht werden, dass die Grillkohle möglichst schnell und möglichst selbsttätig sowie unter weitestgehender Vermeidung von Rauchentwicklung zum Glühen gebracht werden kann.

Aus der gattungsbildenden EP 0 966 911 A1 ist weiter ein Kohlegrill mit einem eine Kohleeinfüllöffnung aufweisenden Kohleaufnahmebehälter bekannt, der in einem einem Grillgut zugewandten Wärmeaustritt-Behälterwandbereich wärmedurchlässig ausgebildet ist. Der Kohleaufnahmebehälter ist auf einer Montageplatte als Basisplatte abnehmbar angeordnet, wobei sowohl der Kohleaufnahmebehälter als auch die Montageplatte im Kohleaufnahmebehälter-Aufstandsbereich des Kohleaufnahmebehälters auf der Montageplatte jeweils wenigstens eine Luftdurchtrittsöffnung aufweisen, die miteinander in einer Strömungsverbindung stehen zur Zuführung von Luft zur im Kohleaufnahmebehälter aufgenommenen Grillkohle. Ferner weist dieser Kohlegrill eine auf der Montageplatte anordenbare Fettpfanne auf, auf oder oberhalb der zu grillendes Grillgut im Bereich des Wärmeaustritt-Behälterwandbereiches des Kohleaufnahmebehälters positionierbar ist zum Auffangen von vom Grillgut kommendem Fett oder dergleichen.

Konkret ist hier ein Kohleaufnahmebehälter vorgesehen, der rechteckblockförmig mit einem Hohlquerschnitt, d. h. einer oberen Einfüllöffnung für Kohle und einer unteren Luftzuführöffnung ausgebildet ist. Die beiden einander gegenüberliegenden parallel verlaufenden Kohleaufnahmebehälter-Seitenwände sind durch eine Gitterstruktur ausgebildet. In diesen Kohleaufnahmebehälter wird die Grillkohle eingefüllt und anschließend angezündet, wobei die Grillkohle im Kohleaufnahmebehälter dauerhaft gehalten wird. Um ein besseres Brennen der Grillkohle zu ermöglichen sind im Behälter-Aufstandsbereich des Kohleaufnahmebehälters Luftdurchtrittsöffnungen in der Montageplatte angeordnet, um von unten her Luft zu der im Kohleaufnahmebehälter aufgenommenen Grillkohle zuzuführen. Dies kann beispielsweise mittels einem Blasebalg erfolgen. Zu beiden Seiten der die Wärmeaustrittsbereiche bildenden seitlichen Gitterstrukturen sind jeweils Halterungen bzw. Aufnahmen vorgesehen, an denen ein Grillspieß gehaltert werden kann. Unterhalb der beiden zu beiden Seiten des Kohleaufnahmebehälters angeordneten Grillspieße ist auf der Montageplatte eine Fettpfanne aufgelegt, um vom Grillspieß abtropfendes Fett oder dergleichen aufzufangen. Mit diesem Aufbau soll eine Anordnung in Verbindung mit einem Holzkohlegrill geschaffen werden, die es ermöglicht, dass zu beiden Seiten des Kohleaufnahmebehälters ein Grillspieß mit Grillgut angeordnet werden kann. Mit der seitlichen Anordnung soll vermieden werden, dass Fett, Bratensäfte und dergleichen in die glühende Grillkohle tropfen kann, was zur Ausbildung von ungesunden karzerogenen Stoffen führen kann. Nachteilig hierbei ist jedoch, dass sich ein derartiger Aufbau eines Kohlegrills nur für eine bestimmte Grillart gut eignet, nämlich für das Grillen mit einem drehbaren Grillspieß, wobei auch hier größeres Grillgut nur sehr langsam zum Garen gebracht werden kann.

Aufgabe der Erfindung ist es daher, einen gattungsgemäßen Kohlegrill so weiterzubilden, dass dieser ein schnelles und effektives Garen von Grillgut ermöglicht sowie eine Vielzahl von verschiedenen Grillmöglichkeiten zur Verfügung stellt.

Diese Aufgabe wird gelöst mit den Merkmalen des Anspruchs 1.

Gemäß Anspruch 1 weist die Montageplatte auch außerhalb des Kohleaufnahmebehälter-Aufstandsbereiches wenigstens eine weitere Luftaustrittsöffnung auf, die im montierten Zustand des Kohleaufnahmebehälters wenigstens teilweise mittels der Fettpfanne abdeckbar ist zum wenigstens teilweisen Verschließen dieser wenigstens einen Luftaustrittsöffnung. Weiter ist bei nicht montiertem Kohleaufnahmebehälter und abgenommener Fettpfanne Grillkohle auf der Montageplatte als Kohleaufnahme, vorzugsweise oberhalb der wenigstens einen Luftdurchtrittsöffnung und/oder der wenigstens einen Luftaustrittsöffnung, anordenbar. Weiterhin ist hier beabstandet oberhalb der Montageplatte eine Halteeinrichtung für Grillgut, vorzugsweise ein Grillspieß und/oder ein Grillrost, zur Aufnahme von zu grillendem Grillgut anordenbar.

Mit diesem erfindungsgemäßen Aufbau wird somit ein Kohlegrill geschaffen, der auf einfachste Art und Weise für eine Vielzahl von unterschiedlichen Grillmöglichkeiten verwendbar ist. So kann z. B. bei Wunsch oder Bedarf ein Grillen von Grillgut mittels dem wenigstens einen Kohleaufnahmebehälter erfolgen, z. B. in Verbindung mit dem Grillen mittels einem Grillspieß. Da die auf der Montageplatte außerhalb des Kohleaufnahmebehälter-Aufstandsbereiches vorgesehenen Luftaustrittsöffnungen bei der Verwendung eines Kohleaufnahmebehälters den Luftzug und die Luftzuführung zur dort aufgenommenen Grillkohle beeinträchtigen würde, ist die Fettpfanne hier in einer Doppelfunktion als Abdeckvorrichtung ausgebildet, die vorzugsweise sämtliche Luftaustrittsöffnungen abdeckt, so dass eine optimierte Zuführung von Zuluft zur im Kohleaufnahmebehälter gesammelten Grillkohle zu derem schnellen Durchglühen ermöglicht wird. Alternativ kann jedoch auch, wenn z. B. mit einem Grillrost gegrillt werden soll, auf den Einsatz der Kohleaufnahmebehälter verzichtet werden und die Grillkohle auf der Montageplatte als Kohleaufnahme aufgeschüttet werden sowie dann der hier beispielhafte Grillrost oberhalb der Kohleaufschüttung gehaltert werden. Für ein schnelles Durchglühen der Kohle kann dabei bei einer derartigen Kohleaufhäufung auf der Montageplatte im Bereich oberhalb der Luftaustrittsöffnungen und oberhalb der Luftdurchtrittsöffnungen Luft von unterhalb der Montageplatte, z. B. mittels einem Gebläse zugeführt werden. Dadurch lässt sich die Grillkohle somit schnell und einfach anheizen, so dass Grillgut, insbesondere auch größeres Grillgut schnell gegart werden kann. Ein derartig aufgebauter Kohlegrill ist somit vorteilhaft einfach umrüstbar und für eine Vielzahl von Einsatzfällen verwendbar. Dadurch ist die Funktionalität und die Flexibilität in der Verwendung des Kohlegrills vorteilhaft sehr hoch.

Besonders gute Grillergebnisse lassen sich insbesondere in Verbindung mit größeren Fleischstücken dann erreichen, wenn auf der Montageplatte nach Anspruch 2 mehrere Kohleaufnahmebehälter oberhalb diesen Kohleaufnahmebehältern im jeweiligen Kohleaufnahmebehälter-Aufstandsbereich zugeordneten Luftdurchtrittsöffnungen anordenbar sind, wobei deren jeweilige Wärmeaustritt-Behälterwandbereiche dem Grillgut-Positionierbereich zugeordnet sind. Besonders gute Ergebnisse liegen vor, falls nach Anspruch 3 der wenigstens eine Kohleaufnahmebehälter durch eine rechteckblockförmige, einen Hohlquerschnitt aufweisende Kohletasche gebildet ist. Dadurch ist auf einfache und optimierte Weise eine Hitzezuführung zum zu grillenden Grillgut möglich.

Nach Anspruch 4 sind die Kohletaschen bezogen auf ihre Längserstreckungsrichtung parallel zueinander ausgerichtet, wobei jede Kohletasche einen auf die benachbarte Kohletasche zu gerichteten Wärmeaustritt-Behälterwandbereich aufweist und die jeweils äußeren Kohletaschen einer Anordnung von wenigstens zwei Kohletaschen auf einer dem Grillgut abgewandten Taschenseite keine Wärmeaustritt-Behälterwandbereiche aufweisen. So kann beispielsweise bei der Verwendung von drei Kohletaschen die mittlere Kohletasche zwei Wärmeaustritt-Behälterwandbereiche aufweisen, während die jeweils randseitigen äußeren Kohletaschen jeweils nur einen auf die mittlere Kohletasche zu gerichteten Wärmeaustritt-Behälterwandbereich aufweist. Damit wird auf einfache Weise erreicht, dass der Wärmeaustritt nur dort erfolgt, wo Wärme bzw. Hitze dem Grillgut zuzuführen ist, d. h. im Zwischenbereich zwischen zwei Kohletaschen. Dies erhöht den Wirkungsgrad des Kohlegrills insgesamt.

Gemäß einer besonders bevorzugten konkreten Ausgestaltung der Erfindung ist nach Anspruch 5 vorgesehen, dass zwei im Wesentlichen parallel zueinander ausgerichtete und voneinander beabstandete Kohletaschen vorgesehen sind, deren Wärmeaustritt-Behälterwandbereiche dem zwischen den beiden Kohletaschen liegenden Grillgut-Positionierbereich zugeordnet sind, wobei im Bereich zwischen den beiden Kohletaschen eine Vielzahl von lochförmigen Luftaustrittsöffnungen in der Montageplatte ausgebildet sind, die mittels der Fettpfanne abdeckbar sind. Ein derartiger konkreter Aufbau liefert sehr gute Grillergebnisse und ist zudem bei relativ wenig Aufwand einfach umrüstbar.

Grundsätzlich gibt es unterschiedliche Möglichkeiten der Ausbildung der Kohletaschen. Eine besonders einfach herzustellende und bevorzugte Ausführungsform nach Anspruch 6 sieht vor, dass die Kohletaschen zur Ausbildung einer Kohleeinfüllöffnung oben offen ausgebildet sind, während die Kohletaschen zur Ausbildung der Kohletaschen-Luftdurchtrittsöffnung unten offen ausgebildet sein können. Bevorzugt sind die Kohletaschen hierbei durch ein U-Blech gebildet und der Wärmeaustritt-Behälterwandbereich durch eine Gitterstruktur als Gitterwand ausgebildet, bevorzugt nach Anspruch 7 durch eine Gitter- und/oder Stäbeanordnung, deren Anordnung so ist, dass die in dem Kohleaufnahmebehälter aufgenommene Kohle darin haltbar ist. Eine derartige Kohletasche kann relativ einfach und preiswert hergestellt werden.

Gemäß einer weiteren bevorzugten Ausführungsform nach Anspruch 8 ist der Kohleaufnahmebehälter mittels einer lösbaren, vorzugsweise einer lösbar verrastbaren Steckverbindung vorzugsweise in einzelne der Luftdurchtrittsöffnungen und/oder Luftaustrittsöffnungen einsteckbar zur lösbaren Festlegung des Kohleaufnahmebehälters auf der Montageplatte. Besonders vorteilhaft bei dieser Ausgestaltung ist, dass hier die Luftdurchtrittsöffnungen z. B. in einer Doppelfunktion gleichzeitig als Bestandteil der Festlegungsmittel verwendet werden können, so dass hierfür keine zusätzlichen bauteilaufwendigen Maßnahmen zur Festlegung des Kohleaufnahmebehälters erforderlich sind.

In einer konkreten Ausgestaltung hierzu ist nach Anspruch 9 die Steckverbindung durch, vorzugsweise an in Längsrichtung der wenigstens einen Kohletasche als Kohleaufnahmebehälter gegenüberliegenden Enden, an dem Kohleaufnahmebehälter angebrachte Verbindungszapfen gebildet, die vorzugsweise in entsprechend zugeordnete Luftdurchtrittsöffnungen und/oder Luftaustrittsöffnungen der Montageplatte einsteckbar sind, zur lösbaren Festlegung des Kohleaufnahmebehälters auf der Montageplatte.

Nach Anspruch 10 wird das Grillgut besonders bevorzugt mittels einem drehbaren Grillspieß gegrillt, wobei dieser Grillspieß dann in einer Halteeinrichtung des Kohlegrills gelagert werden kann. Diese Halteeinrichtung ist vorzugsweise durch ein vorzugsweise eine U-Form aufweisendes Windblech gebildet, das wiederum vorteilhaft am Kohlegrill befestigt werden kann. An dieser Halteeinrichtung ist ferner auch z. B. ein Grillrost lagerbar, wobei dieser Grillrost vorzugsweise auch in der Höhe verstellbar ist, wozu dann an der Halteeinrichtung mehrere obereinander angeordnete Lagerschlitze vorgesehen werden können.

Für eine besonders einfache Herstellung der Montageplatte kann diese nach Anspruch 11 zur Ausbildung der Luftdurchtrittsöffnung und der Luftaustrittsöffnungen als Lochplatte ausgebildet sein, die ein regelmäßiges Lochmuster aufweist. Die Lochgröße ist hierbei so ausgebildet, dass übliche Grillkohle nicht durchfallen kann.

Insbesondere für größer dimensionierte Montageplatten ist für eine gewisse Verwindungssteifigkeit nach Anspruch 12 wenigstens eine Versteifungssicke vorgesehen, die vorzugsweise einen Luftdurchtrittsöffnungen aufweisenden Montageplattenbereich von einem Luftaustrittsöffnungen aufweisenden Montageplattenbereich trennt. Entsprechend einer besonders bevorzugten konkreten Ausgestaltung kann die Montageplatte im Falle zweier parallel und beabstandet voneinander verlaufender Kohletaschen zwei im Wesentlichen parallel verlaufende Versteifungssicken aufweisen, die die beiden Luftdurchtrittsöffnungen aufweisenden Montageplattenbereiche von dem die Luftaustrittsöffnungen aufweisenden Montageplattenbereich trennt. Dadurch wird ein besonders funktionssicherer und verwindungssteifer Aufbau in Verbindung mit einer besonders bevorzugten konkreten Ausgestaltung des erfindungsgemäßen Kohlegrills erhalten.

Für eine besonders vorteilhafte Luftzuführung von der Montageplattenunterseite her ist nach Anspruch 13 vorgesehen, dass die Montageplatte in ein wannenartiges Grillgehäuse mit einer Gehäuseseitenwand und einer Gehäusebodenwand eingesetzt wird, wobei ein Lüftungskanal von unterhalb des Grillgehäuses her an die Gehäusebodenwand geführt ist und dort in eine Gehäuseboden-Öffnung mündet. Im Bereich des Lüftungskanals ist ein Gebläse mittels einer Gebläse-Halterung vorzugsweise lösbar anordenbar dergestalt, dass vom Gebläse erzeugte Luft über den Lüftungskanal und die Gehäuseboden-Öffnung in das Grillgehäuse eingeblasen werden kann, von wo aus die Luft je nach gerade gewählten Aufrüstungsgrad des Grills über die Luftdurchtrittsöffnungen und/oder auch die Luftaustrittsöffnungen zur brennenden Grillkohle strömt.

Nach Anspruch 14 bildet der Lüftungskanal in einer Doppelfunktion gleichzeitig einen Reinigungskanal aus, damit bei abmontiertem Gebläse über die Gehäuseboden-Öffnung und den Lüftungskanal in dem Grillgehäuse vorhandene Reststoffe austragbar sind. Dies kann z. B. dadurch geschehen, dass die Kohletaschen abgenommen werden, dann die vorzugsweise als flache und ebene Platte ausgebildete Montageplatte als Kohleaufnahme abgehoben wird und die Asche in die Gehäusewanne gekippt wird, von wo sie aus durch den Lüftungskanal z. B. durch Kehren entleert wird. Besonders bevorzugt kann hierzu die Gehäusebodenwand ein Gefälle in Richtung zur dann als Austragsöffnung verwendeten Gehäuseboden-Öffnung aufweisen. Um zu verhindern, dass Reststoffe in den Lüftungskanal im normalen Grillbetrieb ggf. auch bei eingeschaltetem Gebläse eindringen kann, kann die Gehäuseboden-Öffnung bevorzugt und vorteilhaft auch durch ein luftdurchlässiges Gitter und/oder einem Staubfilter oder dergleichen als Schutzmaßnahme abgedeckt werden.

Als Gebläse wird beispielsweise ein Haartrockner verwendet, der lösbar in der Gebläse-Halterung halterbar ist, wobei die Gebläse-Halterung vorteilhaft verstellbar und/oder als Verschluss ausgebildet ist. Dazu kann der Lüftungskanal zur Ausbildung der Gebläse-Halterung am unteren Ende längshalbiert sein und Einschnitte aufweisen, in die ein Gebläse-Halter einsetzbar ist.

Besonders bevorzugt ist der Lüftungskanal hierbei auch schräg nach oben zur Gehäuseboden-Öffnung geführt, wodurch das gezielte Austragen von in die Gehäusewanne gekippten Verunreinigungen vereinfacht wird. Der durch ein Gebläse erzeugte Luftstrom führt vorteilhaft durch den Lüftungskanal hoch zu der Montageplatte, die im geeigneten Abstand zum Gehäuseboden auf Haltern ruht und die an den Wänden im Wesentlichen luftdicht abschließt und anliegt, wie dies mit Anspruch 15 beansprucht worden ist.

Nach Anspruch 16 ist die Montageplatte bevorzugt im in das Grillgehäuse eingesetzten Zustand mittels Abstandshaltern in einem definierten Abstand zur Gehäusebodenwand gehalten, wobei zudem nach Anspruch 17 an der Oberseite der Montageplatte auch noch Tragegriffe angeordnet sein können, für deren einfache Handhabung.

Selbstverständlich können an dem erfindungsgemäßen Kohlegrill auch übliche bekannte Füße vorgesehen sein, wobei z. B. zwei auf einer Seite des Kohlegrills angeordnete Füße mittels Rollen versehen sein können und am gegenüberliegenden, den beiden Füßen abgewandten Ende ein Griff am Grillgehäuse vorgesehen sein kann, um dort den Kohlegrill anzuheben und dann entsprechend über die Rollen verfahren zu können. Auch eine Anordnung von vier Rädern, die ggf. feststellbar sind an vier Füßen ist möglich.

Mit der vorliegenden Erfindung wird somit ein einfachst und vorteilhaft umrüstbarer Multifunktions-Kohlegrill geschaffen, der sich einfach und rasch anheizen lässt und der für direktes und indirektes Grillen geeignet ist und der zudem auch leicht gereinigt werden kann.

Anhand einer Zeichnung wird die Erfindung näher erläutert.

Es zeigen:
- Fig. 1: eine schematische, perspektivische Darstellung eines Grillgehäuses, einer Montageplatte und eines Windblechs in einer Explosionsdarstellung,
- Fig. 2: eine schematische, perspektivische Darstellung einer ersten Verwendungsart eines Kohlegrills,
- Fig. 3: eine schematische, perspektivische Darstellung der Montageplatte und eines Kohleaufnahmebehälters in einer Explosionsdarstellung,
- Fig. 4: eine schematische Draufsicht auf den Kohlegrill von Fig. 2,
- Fig. 5: eine schematische Draufsicht auf den Kohlegrill von Fig. 4 mit Kohleeinfüllung und Grillgut,
- Fig. 6: eine schematische, perspektivische Darstellung einer zweiten Verwendungsart des Kohlegrills,
- Fig. 7: eine schematische Schnittdarstellung durch den Kohlegrill, mit einem kombinierten Lüftungs- und Reinigungskanal, und
- Fig. 8: eine schematische Schnittdarstellung durch den Kohlegrill mit zur Reinigung verwendetem Lüftungs- und Reinigungskanal.

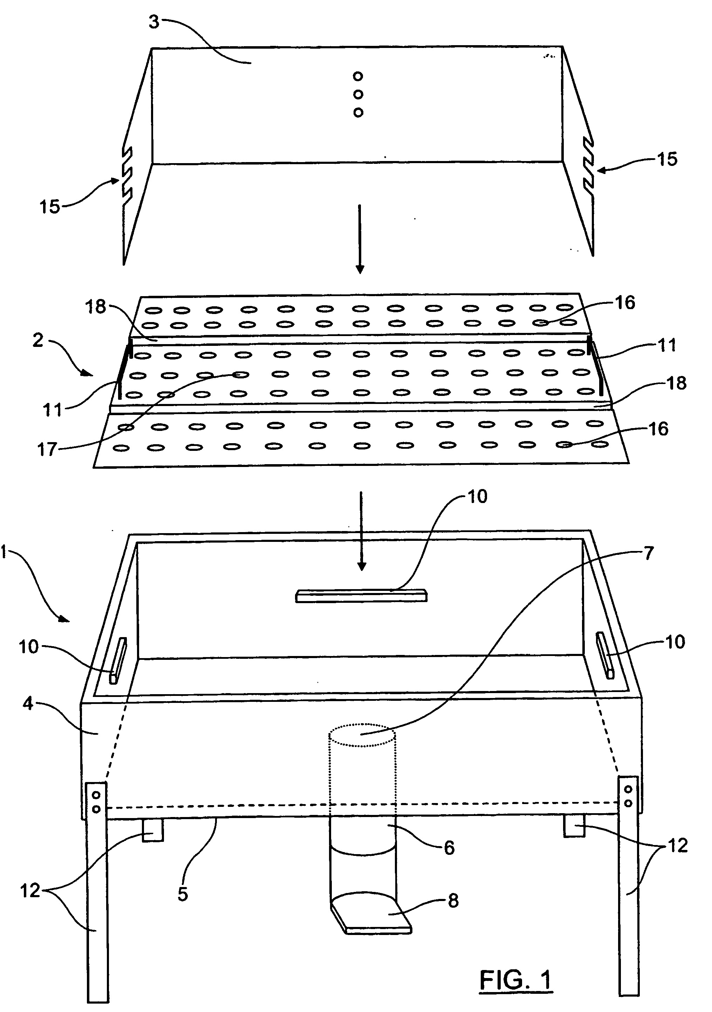

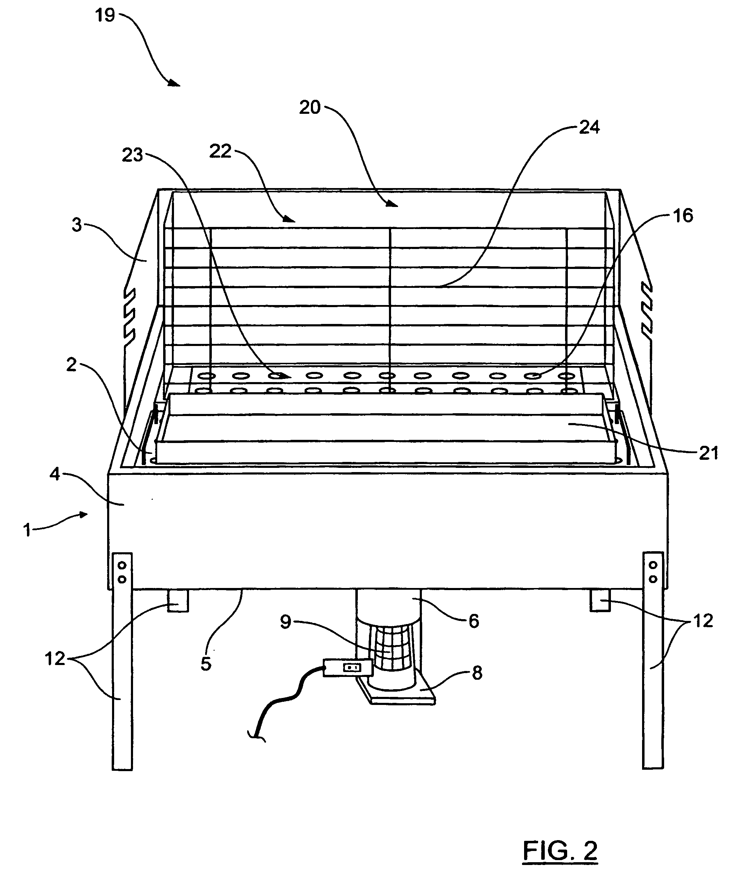

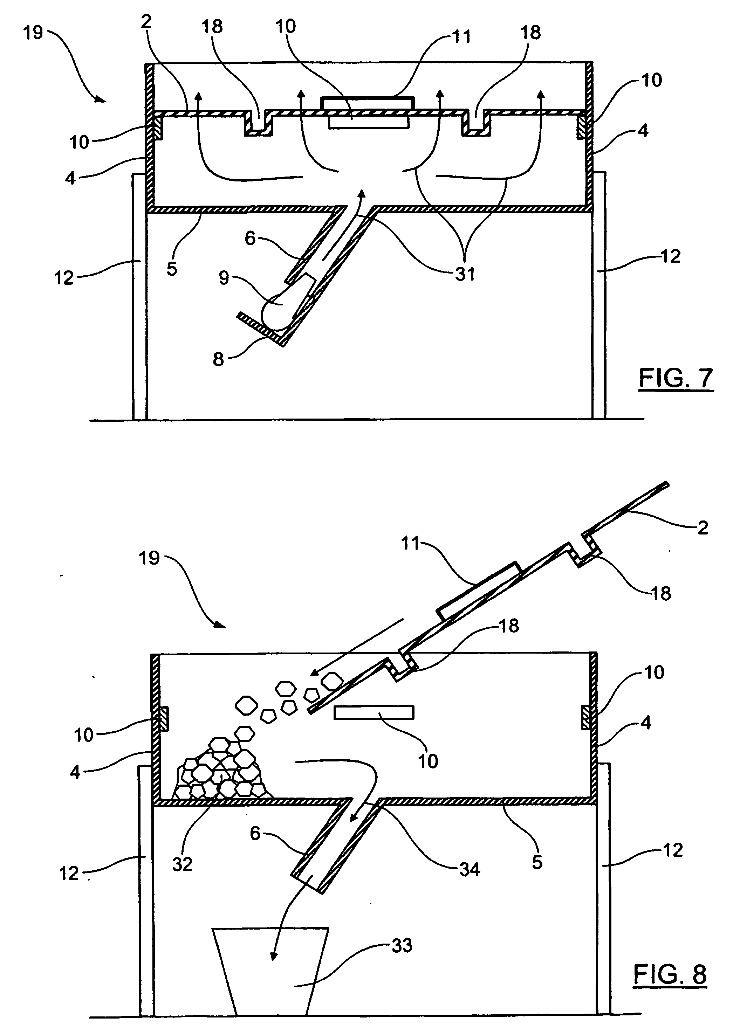

In Fig. 1 ist schematisch und perspektivisch ein Grillgehäuse 1, eine Montageplatte 2 und ein Windblech 3 in einer Explosionsdarstellung dargestellt. Das Grillgehäuse 1 ist wannenartig ausgeführt mit einer Gehäuseseitenwand 4 und einer Gehäusebodenwand 5. Ein Lüftungs- und Reinigungskanal 6 ist von unterhalb des Grillgehäuses 1 her an die Gehäusebodenwand 5 geführt und mündet dort in einer Gehäuseboden-Öffnung 7. An einem der Gehäuseboden-Öffnung 7 gegenüberliegenden Ende des Lüftungs- und Reinigungskanals 6 ist eine Gebläse-Halterung 8 angeordnet, in der ein Gebläse 9 (siehe Fig. 2) befestigt werden kann. Zudem sind am Grillgehäuse 1 jeweils in den vier Eckbereichen Füße 12 angeordnet, die zum Verfahren des Grillgehäuses 1 mit Rollen versehen sein können. Die Montageplatte 2 wird insgesamt durch eine rechteckförmige Lochplatte gebildet, in der mittels Luftdurchtrittsöffnungen 16 und Luftaustrittsöffnungen 17 ein regelmäßiges Lochmuster gebildet ist. In dem in Fig. 1 dargestellten Ausführungsbeispiel der Montageplatte 2 sind jeweils zwei randseitige Montageplattenbereiche mit Luftdurchtrittsöffnungen 16 durch eine Versteifungssicke 18 von einem mittleren Montageplattenbereich mit Luftaustrittsöffnungen 17 getrennt. Im Grillgehäuse 1 sind an den Gehäuseseitenwänden 4 Abstandshalter 10 angeordnet, die einen definierten Abstand zur Gehäusebodenwand 5 aufweisen. Auf die Abstandshalter 10 kann die Montageplatte 2 aufgelegt werden, so dass insgesamt gesehen ein doppelter Boden (siehe Fig. 7) entsteht. Die Montageplatte 2 ist größenmäßig so ausgelegt, dass sie an den Gehäuseseitenwänden 4 formschlüssig sowie im wesentlichen luftdicht anliegt. An der Oberseite der Montageplatte 2 sind zwei Tragegriffe 11 angeordnet, mittels denen die Montageplatte 2 einfach in das Grillgehäuse 1 eingelegt bzw. herausgenommen werden kann. Das Windblech 3 weist eine U-Form auf und kann randseitig am Grillgehäuse 1 befestigt werden. Ferner dient das Windblech 3 als Halteeinrichtung für einen Grillspieß 13 oder einen Grillrost 14, die jeweils durch mehrere übereinander angeordnete Lagerschlitze 15 in unterschiedlichen Höhen am Windblech 3 angeordnet werden können.

In Fig. 2 ist schematisch eine erste mögliche und besonders vorteilhafte Verwendungsart eines Kohlegrills 19, der ein Grillgehäuse 1, eine Montageplatte 2 und ein Windblech 3 aufweist, perspektivisch dargestellt. Am Lüftungs- und Reinigungskanal 6 ist mittels der Gebläse-Halterung 8 das Gebläse 9, das hier als üblicher Haartrockner ausgeführt ist, angeordnet. Auf einem der Montageplattenbereiche mit Luftdurchtrittsöffnungen 16 ist ein Kohleaufnahmebehälter als Kohletasche 20 aufgesetzt. Auf dem Montageplattenbereich mit Luftaustrittsöffnungen 17 ist eine Fettpfanne 21 angeordnet, so dass die Luftaustrittsöffnungen 17 durch die Fettpfanne 21 abgedeckt sind. Der Kohleaufnahmebehälter ist durch eine rechteckblockförmige, einen Hohlquerschnitt aufweisende Kohletasche 20 gebildet, die oben und unten offen ausgebildet ist. Die obere Öffnung dient als Kohleeinfüllöffnung 22 und die untere Öffnung der Kohletasche 20 dient als Kohletaschen-Luftdurchtrittsöffnung 23. Die Kohletasche 20 weist zudem einen Wärmeaustritt-Behälterwandbereich 24, der dem Grillgut-Positionierbereich zugeordnet ist, auf. An der dem Grillgut-Positionierbereich abgewandten Taschenseite ist kein Wärmeaustritt-Behälterwandbereich an der Kohletasche 20 ausgebildet, so dass eine optimierte Hitzezuführung zum Grillgut erzielt wird. Der Wärmeaustritt-Behälterwandbereich 24 ist durch eine Gitter-und/oder Stäbeanordnung so gebildet, dass im montierten Zustand der Kohletasche 20 durch die Kohleeinfüllöffnung 22 eingefüllte Grillkohle 27 innerhalb der Kohletasche 20 gehalten wird.

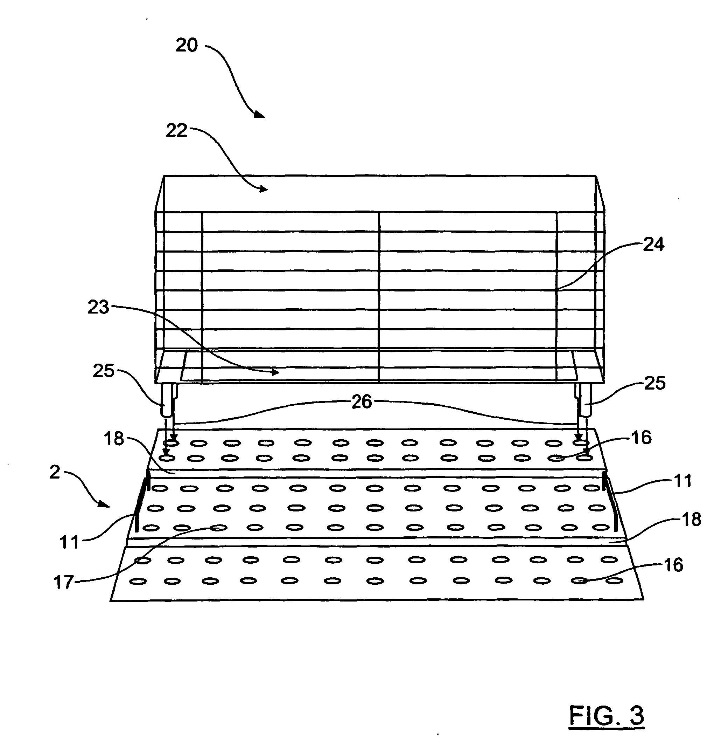

In Fig. 3 ist schematisch die Montageplatte 2 und die Kohletasche 20 perspektivisch dargestellt. An der Unterseite der Kohletasche 20 sind Verbindungszapfen 25 angeordnet, die bei der Montage der Kohletasche 20 and die Montageplatte 2 in die Luftdurchtrittsöffnungen 16 eingesteckt werden können. Dieser Einsteckvorgang ist mit Pfeilen 26 in Fig. 3 gekennzeichnet. Die an der Montageplatte 2 angeordneten Luftdurchtrittsöffnungen 16 und Luftaustrittsöffnungen 17 sind vorzugsweise alle gleich groß, d. h. im wesentlichen identisch ausgeführt, so dass die Kohletasche 20 im Bedarfsfall auch in eine Luftaustrittsöffnung 17 eingesteckt werden kann.

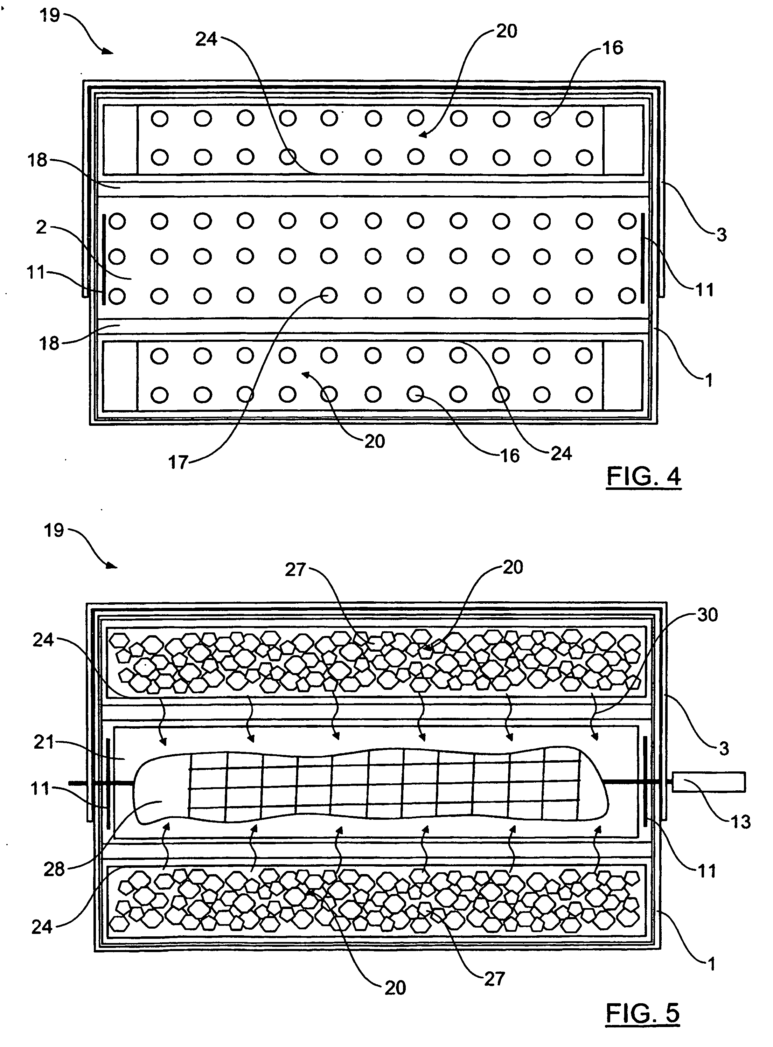

In Fig. 4 ist schematisch eine Draufsicht auf den Kohlegrill 19 von Fig. 2 dargestellt. Die im mittleren Montageplattenbereich mit Luftaustrittsöffnungen 17 in Fig. 2 dargestellte Fettpfanne 21 ist in der Darstellung von Fig. 4 entfernt. In den beiden randseitig angeordneten und durch die Versteifungssicken 18 getrennten Montageplattenbereichen mit Luftdurchtrittsöffnungen 16 ist jeweils eine Kohletasche 20 angeordnet, wobei jeweils der Wärmeaustritt-Behälterwandbereich 24 der beiden Kohletaschen 20 zur mittig angeordneten Grillgut-Position, die im Bereich der Luftaustrittsöffnungen 17 angeordnet ist, weist.

Zum Grillen eines Grillgutes mit beispielsweise einem drehbaren Grillspieß, der in den Lagerschlitzen 15 des Windblechs 3 gehalten ist, werden die beiden Kohletaschen 20 im montierten Zustand mit Grillkohle 27 gefüllt und die Luftaustrittsöffnungen 17 werden mit der Fettpfanne 21 abgedeckt, so dass etwaiges vom Grillgut 28 herabtropfendes Fett aufgefangen werden kann. Mit dem Gebläse 9, das mit der Gebläse-Halterung 8 am Lüftungs- und Reinigungskanal 6 befestigt ist, wird von unten in das Grillgehäuse 1 Luft eingeblasen, die durch die Luftdurchtrittsöffnungen 16 der Montageplatte 2 hindurchtritt und zwischen der in den Kohletaschen 20 angeordneten Grillkohle 27 hindurchströmt. Durch diesen Luftstrom wird ein schnelles Durchglühen der Grillkohle 27 in den Kohletaschen 20 ermöglicht, wodurch die Grillzeit insgesamt vorteilhaft gesenkt werden kann. Die aus den Kohletaschen 20 durch den Wärmeaustritt-Behälterwandbereich 24 austretende Wärme, die durch die Anordnung der Kohletaschen 20 in Richtung Grillgut 28 strömt, ist mit Pfeilen 30 in Fig. 5 schematisch eingezeichnet. Selbstverständlich kann auch nur mit einer Kohletasche 20, wie dies in Fig. 2 dargestellt ist, gegrillt werden.

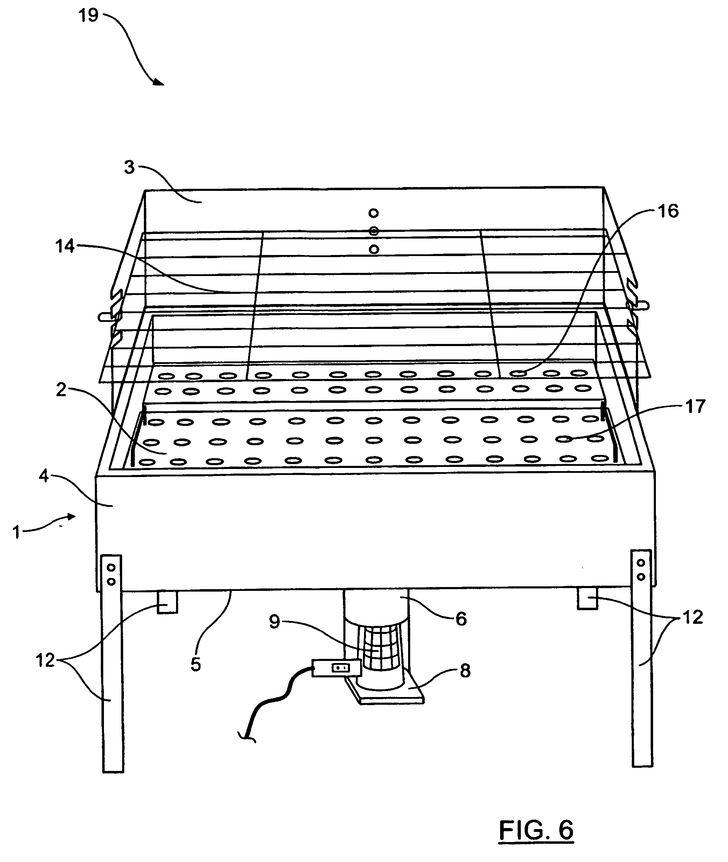

Mit wenigen und einfachen Handgriffen kann der Kohlegrill 19 von der in den Figuren 2 bzw. 4 dargestellten Ausführungsform in die in Fig. 6 schematisch und perspektivisch dargestellte zweite Verwendung umgebaut werden. Dazu werden die Kohletaschen 20 und die Fettpfanne 21 von der Montageplatte 2 entfernt, so dass alle Luftdurchtrittsöffnungen 16 und Luftaustrittsöffnungen 17 offen sind. Zum Grillen wird auf die Montageplatte 2 Grillkohle 27 (hier nicht mit dargestellt) verteilt, wobei der durch das Gebläse 9 erzeugte Luftstrom durch die Luftdurchtrittsöffnungen 16 und die Luftaustrittsöffnungen 17 hindurchströmt und somit durch die auf der Montageplatte 2 liegende Grillkohle 27 für ein schnelles Durchglühen strömt. Anstelle des Grillspießes 13 kann auch der Grillrost 14 am Windblech 3 angeordnet werden, auf den dann das Grillgut aufgelegt werden kann.

In den Fig. 7 und 8 ist jeweils schematisch eine Schnittdarstellung durch den Kohlegrill 19 dargestellt, mittels denen die Doppelfunktion des Lüftungs- und Reinigungskanals 6 verdeutlicht werden soll. In Fig. 7 ist schematisch die Funktion der Luftzuführung für ein schnelles Durchglühen der Grillkohle 27 gezeigt. Mittels der Montageplatte 2, die auf die Abstandshalter 10 im Grillgehäuse 1 aufgelegt ist, ist ein doppelwandiger Boden geschaffen. Durch den an der Gehäusebodenwand 5 angeordneten Lüftungs- und Reinigungskanal 6 strömt durch die Gehäuseboden-Öffnung 7 Luft, wobei der Luftstrom vom Gebläse 9 erzeugt wird. Im Zwischenbereich zwischen Gehäusebodenwand 5 und Montageplatte 2 kann sich die Luft verteilen und strömt durch die Luftdurchtrittsöffnungen 16 und Luftaustrittsöffnungen 17 hindurch. Die Luftströmung ist mit den Pfeilen 31 in Fig. 7 eingezeichnet. Je nach Aufbau des Grills liegt die Grillkohle 27 direkt auf der Montageplatte 2 (Verwendungsform von Fig. 6), so dass alle Luftdurchtrittsöffnungen 16 und Luftaustrittsöffnungen 17 offen sind und dementsprechend für eine Durchströmung der Luft zur Grillkohle 27 hin verwendet wird. Ist der Kohlegrill 19 mit Kohletaschen 20 bestückt (Verwendungsform von Fig. 2 bzw. Fig. 4), so sind bei aufgelegter Fettpfanne 21 die Luftaustrittsöffnungen 17 abgedeckt und der Luftstrom tritt nur im Bereich der Kohletaschen 20 durch die Luftdurchtrittsöffnungen 16 nach oben zur in den Kohletaschen 20 angeordneten Grillkohle 27.

Nach dem Grillen können zur Reinigung des Kohlegrills 19 je nach Ausführungsform entweder die Kohletaschen 20 oder nur der Grillrost 14 bzw. der Grillspieß 13und das Windblech 3 entfernt werden, so dass im Anschluss daran die Montageplatte 2 aus dem Grillgehäuse 1 herausgehoben werden kann. Die auf der Montageplatte 2 liegenden Kohlereste 32 bzw. die bei der Verbrennung der Grillkohle 27 entstandene Asche kann in das Grillgehäuse 1 geschüttet werden und von dort durch den Lüftungs- und Reinigungskanal 6, nachdem das Gebläse 9 und vorzugsweise die Gebläse-Halterung 8 demontiert wurden, in ein Abfallgefäß 33 ausgekehrt werden. Dies ist mit den Pfeilen 34 in Fig. 8 eingezeichnet.

Somit ist ein Kohlegrill 19 geschaffen, der mit wenigen Handgriffen einfach und schnell auf verschiedene Ausführungsformen umgerüstet werden kann. Einerseits kann mit auf der Montageplatte 2 aufgesetzten Kohletaschen 20 gegrillt werden, wobei das Grillgut 28 zwischen den beiden Kohletaschen 20 angeordnet wird, und andererseits besteht die Möglichkeit die Grillkohle 27 direkt auf die Montageplatte 2 zu legen, wobei das Grillgut 28 dabei oberhalb der Montageplatte 2 angeordnet wird. Unabhängig von der Ausführungsform besteht immer die Möglichkeit mit einem Gebläse 9 durch den Lüftungs- und Reinigungskanal 6 Luft in das Grillgehäuse 1 von unten einzublasen, die je nach Ausführungsform durch die Luftdurchtrittsöffnungen 16 und/oder durch die Luftaustrittsöffnungen 17 hindurchströmt und somit ein schnelles und einfaches Durchglühen der Grillkohle 27 ermöglicht. Nach dem Grillen besteht durch den Lüftungs- und Reinigungskanal 6 eine einfache Möglichkeit Kohlereste 32 bzw. Asche aus dem Grillgehäuse 1 durch den Lüftungs- und Reinigungskanal 6 hindurch auszukehren.

## Patentansprüche

1. Kohlegrill
mit einem eine Kohleeinfüllung aufweisenden Kohleaufnahmebehälter, der in einem einem Grillgut zugewandten Wärmeaustritt-Behälterwandbereich wärmedurchlässig ausgebildet ist, wobei der Kohleaufnahmebehälter auf einer Montageplatte als Basisplatte abnehmbar angeordnet ist und der Kohleaufnahmebehälter sowie die Montageplatte im Kohleaufnahmebehälter-Aufstandsbereich des Kohleaufnahmebehälters auf der Montageplatte jeweils wenigstens eine Luftdurchtrittsöffnung aufweisen, die miteinander in einer Strömungsverbindung stehen zur Zuführung von Luft zur im Kohleaufnahmebehälter aufgenommenen Grillkohle, und
mit einer auf der Montageplatte anordenbaren Fettpfanne, auf oder oberhalb der zu grillendes Grillgut im Bereich des Wärmeaustritt-Behälterwandbereiches des Kohleaufnahmebehälters positionierbar ist zum Auffangen von vom Grillgut kommendem Fett oder dergleichen,
**dadurch gekennzeichnet,**
**dass** die Montageplatte (2) auch außerhalb des Kohleaufnahmebehälter-Aufstandsbereiches und somit zusätzlich zu der wenigstens einen Luftdurchtrittsöffnung (16) wenigstens eine weitere Luftaustrittsöffnung (17) aufweist, die im montierten Zustand des Kohleaufnahmebehälters (20) wenigstens teilweise mittels der entsprechend als Abdeckvorrichtung ausgebildeten Fettpfanne (21) abdeckbar ist zum wenigstens teilweisen Verschließen dieser wenigstens einen Luftaustrittsöffnung (17), und
**dass** bei nicht montiertem Kohleaufnahmebehälter (20) und abgenommener Fettpfanne (21) Grillkohle (27) auf der Montageplatte (2) als Kohleaufnahme, vorzugsweise oberhalb der wenigstens einen Luftdurchtrittsöffnung (16) und/oder der wenigstens einen Luftaustrittsöffnung (17), anordenbar ist sowie weiterhin beabstandet oberhalb der Montageplatte (2) eine Halteeinrichtung (3) für Grillgut (28), vorzugsweise ein Grillspieß (13) und/oder ein Grillrost (14), zur Aufnahme von zu grillendem Grillgut (28) anordenbar ist.

2. Kohlegrill nach Anspruch 1, **dadurch gekennzeichnet, dass** auf der Montageplatte (2) mehrere Kohleaufnahmebehälter (20) oberhalb diesen im jeweiligen Kohleaufnahmebehälter-Aufstandsbereich zugeordneten Luftdurchtrittsöffnungen (16) anordenbar sind, deren jeweilige Wärmeaustritt-Behälterwandbereiche (24) dem Grillgut-Positionierbereich zugeordnet sind.

3. Kohlegrill nach Anspruch 1 oder Anspruch 2, **dadurch gekennzeichnet, dass** der wenigstens eine Kohleaufnahmebehälter durch eine rechteckblockförmige, einen Hohlquerschnitt aufweisende Kohletasche (20) gebildet ist.

4. Kohlegrill nach Anspruch 2 und 3, **dadurch gekennzeichnet, dass** die Kohletaschen (20) bezogen auf ihre Längserstreckungsrichtung parallel zueinander ausgerichtet sind, wobei jede Kohletasche (20) einen auf die benachbarte Kohletasche (20) zu gerichteten Wärmeaustritt-Behältewandbereich (24) aufweist und die jeweils äußeren Kohletaschen (20) einer Anordnung von wenigstens zwei Kohletaschen (20) auf einer dem Grillgut (28) abgewandten Taschenseite keine Wärmeaustritt-Behälterwandbereiche aufweisen.

5. Kohlegrill nach Anspruch 4, **dadurch gekennzeichnet,**
**dass** zwei im Wesentlichen parallel zueinander ausgerichtete und voneinander beabstandete Kohletaschen (20) vorgesehen sind,
deren Wärmeaustritt-Behälterwandbereiche (24) dem zwischen den beiden Kohletaschen (20) liegenden Grillgut-Positionierbereich (28) zugeordnet sind, und
**dass** im Bereich zwischen den beiden Kohletaschen (20) eine Vielzahl von lochförmigen Luftaustrittsöffnungen (17) in der Montageplatte ausgebildet sind, die mittels der Fettpfanne (21) abdeckbar sind.

6. Kohlegrill nach einem der Ansprüche 3 bis 5, **dadurch gekennzeichnet,**
**dass** die Kohletaschen (20) zur Ausbildung einer Kohleeinfüllöffnung (22) oben offen ausgebildet sind, und/oder
**dass** die Kohletaschen (20) zur Ausbildung der Kohletaschen-Luftdurchtrittsöffnung (23) unten offen ausgebildet ist.

7. Kohlegrill nach einem der Ansprüche 1 bis 6, **dadurch gekennzeichnet, dass** der Wärmeaustritt-Behälterwandbereich (24) durch eine Gitter-und/oder Stäbeanordnung gebildet ist, deren Anordnung so ist, dass die in dem Kohleaufnahmebehälter (20) aufgenommene Grillkohle (27) darin haltbar ist.

8. Kohlegrill nach einem der Ansprüche 1 bis 7, **dadurch gekennzeichnet, dass** der Kohleaufnahmebehälter (20) mittels einer lösbaren, vorzugsweise einer lösbar verrastbaren, Steckverbindung vorzugsweise in einzelne der Luftdurchtrittsöffnungen (16) und/oder Luftaustrittsöffnungen (17) einsteckbar ist, zur lösbaren Festlegung des Kohleaufnahmebehälters (20) auf der Montageplatte (2).

9. Kohlegrill nach Anspruch 8, **dadurch gekennzeichnet, dass** die Steckverbindung durch, vorzugsweise an in Längsrichtung der wenigstens einen Kohletasche (20) als Kohleaufnahmebehälter gegenüberliegenden Enden, an dem Kohleaufnahmebehälter angebrachte Verbindungszapfen (25) gebildet ist, die vorzugsweise in entsprechend zugeordnete Luftdurchtrittsöffnungen (16) und/oder Luftaustrittsöffnungen(17) der Montageplatte (2) lösbaren Festlegung des Kohleaufnahmebehälters (20) auf der Montageplatte (2).

10. Kohlegrill nach einem der Ansprüche 1 bis 9, **dadurch gekennzeichnet,**
**dass** das Grillgut (28) mittels einem vorzugsweise drehbaren Grillspieß (13) im Bereich oberhalb der Fettpfanne (21) im Grillgut-Positionierbereich gehalten ist, und
**dass** der Grillspieß (13) in einer Halteeinrichtung (3) des Kohlegrills (19) gelagert ist, die vorzugsweise durch ein vorzugsweise eine U-Form aufweisendes Windblech (3) gebildet ist, das vorzugsweise randseitig am Kohlegrill (19) befestigbar ist, und
**dass** an der Halteeinrichtung (3) ferner auch der Grillrost (14), vorzugsweise höhenverstellbar durch mehrere obereinander angeordnete Lagerschlitze (15), lagerbar ist.

11. Kohlegrill nach einem der Ansprüche 1 bis 10, **dadurch gekennzeichnet, dass** die Montageplatte (2) durch eine rechteckförmige Lochplatte zur Ausbildung der Luftdurchtrittsöffnungen (16) und der Luftaustrittsöffnungen (17) gebildet ist, die ein regelmäßiges Lochmuster aufweist.

12. Kohlegrill nach einem der Ansprüche 1 bis 11, **dadurch gekennzeichnet, dass** die Montageplatte (2) wenigstens eine Versteifungssicke (18) zu deren Versteifung aufweist, die vorzugsweise einen Luftdurchtrittsöffnungen (16) aufweisenden Montageplattenbereich von einem Luftaustrittsöffnungen (17) aufweisenden Montageplattenbereich trennt, vorzugsweise im Falle zweier parallel und beabstandet voneinander verlaufender Kohletaschen (20) zwei im wesentlichen parallel verlaufende Versteifungssicken (18) aufweist, die die beiden Luftdurchtrittsöffnungen (16) aufweisenden Montageplattenbereiche von dem die Luftaustrittsöffnungen (17) aufweisenden Montageplattenbereich trennt.

13. Kohlegrill nach einem der Ansprüche 1 bis 12, **dadurch gekennzeichnet, dass** die Montageplatte (2) in ein wannenartiges Grillgehäuse (1) mit einer Gehäuseseitenwand (4) und einer Gehäusebodenwand (5) einsetzbar ist,
dass ein Lüftungskanal (6) von unterhalb des Grillgehäuses (1) her an die Gehäusebodenwand (5) geführt ist und dort in einer Gehäuseboden-Öffnung (7) mündet,
dass im Bereich des Lüftungskanals (6) ein Gebläse (9) mittels einer Gebläse-Halterung (8) vorzugsweise lösbar anordenbar ist, dergestalt,
dass vom Gebläse (9) erzeugte Luft über den Lüftungskanal (6) und die Gehäuseboden-Öffnung (7) in das Grillgehäuse einblasbar ist von wo aus die Luft über die Luftdurchtrittsöffnungen (16) und ggf. auch die Luftaustrittsöffnungen (17) zur brennenden Grillkohle (27) strömt.

14. Kohlegrill nach Anspruch 13, **dadurch gekennzeichnet, dass** der Lüftungskanal (6) in einer Doppelfunktion gleichzeitig einen Reinigungskanal (6) ausbildet dergestalt, dass über die Gehäuseboden-Öffnung (7) und den Lüftungskanal (6) bei abmontiertem Gebläse (9) in dem Grillgehäuse (1) vorhandene Reststoffe (32) austragbar sind, die vorzugsweise von der abgehobenen Montageplatte (2) in die vorzugsweise trichterförmig zur Gehäuseboden-Öffnung (7) zulaufende Gehäusewanne kippbar sind.

15. Kohlegrill nach Anspruch 13 oder Anspruch 14, **dadurch gekennzeichnet, dass** das Grillgehäuse (1) und die Montageplatte (2) so ausgebildet sind, dass die Montageplatte (2) an den Gehäusewänden (4) formschlüssig sowie im wesentlichen luftdicht anliegt.

16. Kohlegrill nach einem der Ansprüche 13 bis 15, **dadurch gekennzeichnet, dass** die Montageplatte (2) im in das Grillgehäuse (1) eingesetzten Zustand mittels Abstandshaltern (10) in einem definierten Abstand zur Gehäusebodenwand (5) gehalten ist.

17. Kohlegrill nach einem der Ansprüche 13 bis 16, **dadurch gekennzeichnet, dass** an der Oberseite der Montageplatte (2) Tragegriffe (11) angeordnet sind.

## Claims

1. Charcoal barbecue
having a charcoal container which is filled with charcoal and is formed such that it transmits heat in a heat-outlet region of the container wall which faces a product being barbecued, with the charcoal container being arranged on an installation plate in the form of a base plate such that it can be removed, and the charcoal container and the installation plate each having at least one air-passage opening in the standing region of the charcoal container on the installation plate, these openings forming a flow connection with one another in order to supply air to the barbecue charcoal held in the charcoal container, and
having a drip pan which can be arranged on the installation plate and on or above which a product to be barbecued can be positioned in the region of the heat-outlet region of the wall of the charcoal container in order to capture grease or the like coming from the product being barbecued,
**characterized**
**in that** the installation plate (2) also has at least one further air-outlet opening (17) outside the standing region of the charcoal container and thus in addition to the at least one air-passage opening (16), it being possible to at least partly cover this air-outlet opening when the charcoal container (20) is in the installed state by means of the drip pan (21) which is correspondingly in the form of a covering apparatus, in order to at least partially close this at least one air-outlet opening (17), and
**in that**, when the charcoal container (20) is not installed and the drip pan (21) is removed, barbecue charcoal (27) can be arranged on the installation plate (2) in the form of a charcoal holder, preferably above the at least one air-passage opening (16) and/or the at least one air-outlet opening (17), and furthermore a holding device (3) for a product (28) being barbecued, preferably a barbecue spit (13) and/or a barbecue grate (14), can be arranged at a distance above the installation plate (2) in order to hold a product (28) to be barbecued.

2. Charcoal barbecue according to Claim 1, **characterized in that** a plurality of charcoal containers (20) can be arranged on the installation plate (2) above air-passage openings (16) associated with the said charcoal containers in the respective standing region of the charcoal container, the respective heat-outlet regions (24) of the charcoal container walls being associated with the positioning region for the product being barbecued.

3. Charcoal barbecue according to Claim 1 or Claim 2, **characterized in that** the at least one charcoal container is formed by a rectangular block-shaped charcoal pocket (20) which has a hollow cross section.

4. Charcoal barbecue according to Claims 2 and 3, **characterized in that** the charcoal pockets (20) are oriented parallel to one another in terms of their direction of longitudinal extent, with each charcoal pocket (20) having a heat-outlet region (24) of the container wall which can be directed to the adjacent charcoal pocket (20), and the respectively outer charcoal pockets (20) of an arrangement of at least two charcoal pockets (20) not having any heat-outlet regions of the container wall on a side of the pocket which faces away from the product (28) being barbecued.

5. Charcoal barbecue according to Claim 4, **characterized**
**in that** two charcoal pockets (20), which are oriented substantially parallel to one another and are spaced apart from one another, are provided,
the heat-outlet regions (24) of the container wall of the said charcoal pockets are associated with the positioning region (28) for the product being barbecued located between the two charcoal pockets (20), and
**in that** a multiplicity of hole-like air-outlet openings (17) are formed in the installation plate in the region between the two charcoal pockets (20), it being possible to cover these air-outlet openings by means of the drip pan (21).

6. Charcoal barbecue according to one of Claims 3 to 5, **characterized**
**in that** the charcoal pockets (20) are formed to be open at the top in order to form a charcoal filling opening (22), and/or
**in that** the charcoal pockets (20) are formed to be open at the bottom in order to form the air-passage opening (23) in the charcoal pocket.

7. Charcoal barbecue according to one of Claims 1 to 6, **characterized in that** the heat-outlet region (24) of the container wall is formed by a grid and/or bar arrangement which is arranged in such a way that the barbecue charcoal (27) held in the charcoal container (20) can be kept there.

8. Charcoal barbecue according to one of Claims 1 to 7, **characterized in that** the charcoal container (20) can preferably be inserted into individual air-passage openings (16) and/or air-outlet openings (17) by means of a releasable, preferably a releasably lockable, plug connection, in order to fix the charcoal container (20) on the installation plate (2) such that it can be released.

9. Charcoal barbecue according to Claim 8, **characterized in that** the plug connection is formed by connecting pins (25) which are provided on the charcoal container, preferably on opposite ends in the longitudinal direction of the at least one charcoal pocket (20) in the form of a charcoal container, it preferably being possible to insert the said connecting pins into correspondingly associated air-passage openings (16) and/or air-outlet openings (17) in the installation plate (2) in order to fix the charcoal container (20) on the installation plate (2) such that it can be released.

10. Charcoal barbecue according to one of Claims 1 to 9, **characterized**
**in that** the product (28) being barbecued is held in the positioning region for the product being barbecued by means of a preferably rotatable barbecue spit (13) in the region above the drip pan (21), and
**in that** the barbecue spit (13) is mounted in a holding device (3) of the charcoal barbecue (19), the said holding device preferably being formed by a wind guard (3) which preferably has a U shape and can preferably be secured to the edge of the charcoal barbecue (19), and
**in that** the barbecue grate (14) can furthermore also be mounted on the holding device (3), preferably in a manner such that it can be vertically adjusted by means of a plurality of bearing slots (15) arranged one above the other.

11. Charcoal barbecue according to one of Claims 1 to 10, **characterized in that** the installation plate (2) is formed by a rectangular perforated plate for forming the air-passage openings (16) and the air-outlet openings (17) which has a regular pattern of holes.

12. Charcoal barbecue according to one of Claims 1 to 11, **characterized in that** the installation plate (2) has at least one reinforcing bead (18) for reinforcing it which preferably separates a region of the installation plate which has air-passage openings (16) from a region of the installation plate which has air-outlet openings (17), and preferably has two reinforcing beads (18), which run essentially parallel, in the case of two charcoal pockets (20) which run parallel and spaced apart from one another, the said reinforcing beads separating the two regions of the installation plate which have air-passage openings (16) from the region of the installation plate which has the air-outlet openings (17).

13. Charcoal barbecue according to one of Claims 1 to 12, **characterized in that** the installation plate (2) can be inserted into a tub-like barbecue housing (1) having a housing side wall (4) and a housing base wall (5),
**in that** a ventilation duct (6) is routed from below the barbecue housing (1) to the housing base wall (5) and there issues into an opening (7) in the housing base,
**in that** a fan (9) can be arranged in the region of the ventilation duct (6) by means of a fan holder (8), preferably such that it can be released, in such a way
that air produced by the fan (9) can be blown into the barbecue housing via the ventilation duct (6) and the opening (7) in the housing base, from where the air flows to the burning barbecue charcoal (27) via the air-passage openings (16) and possibly also the air-outlet openings (17).

14. Charcoal barbecue according to Claim 13, **characterized in that** the ventilation duct (6) provides a dual function by at the same time forming a cleaning duct (6) in such a way that residues (32) found in the barbecue housing (1) when the fan (9) is not installed can be removed via the opening (7) in the housing base and the ventilation duct (6), it preferably being possible to tip the said residues from the raised installation plate (2) into the housing tub which runs to the opening (7) in the housing base in a preferably funnel-like manner.

15. Charcoal barbecue according to Claim 13 or Claim 14, **characterized in that** the barbecue housing (1) and the installation plate (2) are formed in such a way that the installation plate (2) rests against the housing walls (4) in an interlocking and substantially airtight manner.

16. Charcoal barbecue according to one of Claims 13 to 15, **characterized in that**, in the state in which it is inserted into the barbecue housing (1), the installation plate (2) is held at a defined distance from the housing base wall (5) by means of spacers (10).

17. Charcoal barbecue according to one of Claims 13 to 16, **characterized in that** handles (11) are arranged on the upper face of the installation plate (2).

## Revendications

1. Barbecue à charbon, comprenant
un bac de réception de charbon présentant un remplissage de charbon et étant réalisé de façon à laisser passer la chaleur dans une zone de paroi du bac de sortie de chaleur, tournée vers les grillades, le bac de réception de charbon étant disposé de façon amovible sur une plaque de montage en tant que plaque de base, et le bac de réception de charbon ainsi que la plaque de montage présentant dans la zone de pose de bac de réception de charbon du bac de réception de charbon sur la plaque de montage respectivement au moins un orifice de passage d'air, les orifices communiquant ensemble dans une connexion d'écoulement pour amener de l'air au charbon de bois reçu dans le bac de réception de charbon, et
une lèchefrite, à disposer sur la plaque de montage, sur laquelle ou au-dessus de laquelle on peut positionner des grillades à griller au niveau de la zone de paroi de bac de sortie de chaleur du bac de réception de charbon et pour recueillir la graisse ou similaires provenant des grillades,
**caractérisé en ce que**
la plaque de montage (2) présente aussi en dehors de la zone de pose de bac de réception de charbon, et donc en plus dudit au moins un orifice de passage d'air (16), au moins un autre orifice de sortie d'air (17) qui, à l'état monté du bac de réception de charbon (20), peut être recouvert au moins en partie au moyen de la lèchefrite (21) réalisée de façon correspondante comme un dispositif de couverture pour fermer au moins en partie cet au moins un orifice de sortie d'air (17), et **en ce que**
lorsque le bac de réception de charbon (20) n'est pas monté et que la lèchefrite (21) est déposée, du charbon de bois (27) peut être disposé sur la plaque de montage (2) en tant que réceptacle de charbon, de préférence au-dessus dudit au moins un orifice de passage d'air (16) et/ou dudit au moins un orifice de sortie d'air (17), ainsi que de façon en outre écartée au-dessus de la plaque de montage (2), un dispositif de maintien (3) pour les grillades (28), de préférence une broche (13) et/ou un grill (14) pour recevoir des grillades (28) à griller, peut être disposé.

2. Barbecue à charbon selon la revendication 1, **caractérisé en ce que**, sur la plaque de montage (2), plusieurs bacs de réception de charbon (20) peuvent être disposés au-dessus d'orifices de passage d'air (16) affectés à ceux-ci dans la zone respective de pose de bac de réception de charbon, bacs dont les zones respectives de paroi de bac de sortie de chaleur (24) sont associées à la zone de positionnement des grillades.

3. Barbecue à charbon selon la revendication 1 ou 2, **caractérisé en ce que** ledit au moins un bac de réception de charbon est formé par une poche à charbon (20) sous forme de bloc rectangulaire et présentant une section creuse.

4. Barbecue à charbon selon la revendication 2 ou 3, **caractérisé en ce que** les poches à charbon (20) sont orientées parallèlement les unes aux autres, par rapport à leur direction d'étendue longitudinale, chaque poche à charbon (20) présentant une zone de paroi de bac de sortie de chaleur (24) orientée vers la poche à charbon (20) voisine, et les poches à charbon (20) respectivement extérieures d'un agencement d'au moins deux poches à charbon (20) ne présentent pas de zones de paroi de bac de sortie de chaleur sur un côté de poche opposé aux grillades (28).

5. Barbecue à charbon selon la revendication 4, **caractérisé en ce que**
deux poches à charbon (20) orientées substantiellement parallèles l'une à l'autre et espacées l'une de l'autre sont prévues,
dont les zones de paroi de bac de sortie de chaleur (24) sont affectées à la zone de positionnement des grillades (28) située entre les deux poches à charbon (20), et
**en ce que**, dans la zone entre les deux poches à charbon (20), une pluralité d'orifices de sortie d'air en forme de trou (17) est réalisée dans la plaque de montage, les orifices pouvant être recouverts au moyen de la lèchefrite (21).

6. Barbecue à charbon selon l'une quelconque des revendications 3 à 5, **caractérisé en ce que** les poches à charbon (20) pour réaliser une ouverture de remplissage de charbon (22) sont réalisées ouvertes vers le haut, et/ou
**en ce que** les poches à charbon (20) pour réaliser l'orifice de passage d'air de poche à charbon (23) sont réalisées ouvertes vers le bas.

7. Barbecue à charbon selon l'une quelconque des revendications 1 à 6, **caractérisé en ce que** la zone de paroi de bac de sortie de chaleur (24) est formée par un agencement de grille et/ou de barres dont l'agencement est tel que le charbon de bois (27) reçu dans le bac de réception de charbon (20) peut y être maintenu.

8. Barbecue à charbon selon l'une quelconque des revendications 1 à 7, **caractérisé en ce que** le bac de réception de charbon (20) peut s'emboîter au moyen d'une liaison par emboîtement amovible, de préférence encliquetable de façon amovible, dans des orifices individuels des orifices de passage d'air (16) et/ou des orifices de sortie d'air (17) pour une immobilisation amovible du bac de réception de charbon (20) sur la plaque de montage (2).

9. Barbecue à charbon selon la revendication 8, **caractérisé en ce que** la liaison par emboîtement est formée par des tenons de raccordement (25) installés sur le bac de réception de charbon, de préférence aux extrémités opposées dans la direction longitudinale de ladite au moins une poche à charbon (20) en tant que bac de réception de charbon, les tenons entrant de préférence dans des orifices de passage d'air (16) et/ou des orifices de sortie d'air (17), associés de façon correspondante, de la plaque de montage (2) pour une immobilisation amovible du bac de réception de charbon (20) sur la plaque de montage (2).

10. Barbecue à charbon selon l'une quelconque des revendications 1 à 9, **caractérisé en ce que**
les grillades (28) sont maintenues au moyen d'une broche (13) de préférence rotative dans la zone au-dessus de la lèchefrite (21) dans la zone de positionnement des grillades, et **en ce que**
la broche (13) est logée dans un dispositif de maintien (3) du barbecue à charbon (19) qui est formé de préférence par une tôle de protection (3) présentant une forme de U, qui peut être fixé de préférence du côté du bord sur le barbecue à charbon (19), et **en ce que**
sur le dispositif de maintien (3), on peut en outre monter le grill (14), de préférence de façon réglable en hauteur par plusieurs fentes de logement (15) disposées les unes au-dessus des autres.

11. Barbecue selon l'une quelconque des revendications 1 à 10, **caractérisé en ce que** la plaque de montage (2) est formée par une plaque perforée rectangulaire pour former les orifices de passage d'air (16) et les orifices de sortie d'air (17) et présentant un motif de perforation régulier.

12. Barbecue à charbon selon l'une quelconque des revendications 1 à 11, **caractérisé en ce que** la plaque de montage (2) présente au moins une moulure de renforcement (18) destinée à la renforcer, qui sépare de préférence une zone de plaque de montage présentant des orifices de passage d'air (16) d'une zone de plaque de montage présentant des orifices de sortie d'air (17), qui, dans le cas de deux poches à charbon (20) s'étendant en parallèle et de façon espacée l'une de l'autre, présente de préférence deux moulures de renforcement (18) s'étendant substantiellement en parallèle et qui séparent les deux zones de plaque de montage présentant les orifices de passage d'air (16) de la zone de plaque de montage présentant les orifices de sortie d'air (17).

13. Barbecue à charbon selon l'une quelconque des revendications 1 à 12, **caractérisé en ce que** la plaque de montage (2) peut s'insérer dans un corps de barbecue (1) de type cuve avec une paroi latérale de corps (4) et une paroi inférieure de corps (5),
**en ce qu'**un canal d'aération (6) est amené depuis le dessous du corps de barbecue (1) jusqu'à la paroi inférieure de corps (5) et y débouche dans une ouverture de fond de corps (7),
**en ce qu'**au niveau du canal d'aération (6), un ventilateur (9) peut être disposé de préférence de façon amovible au moyen d'un support de ventilateur (8), de telle sorte
que l'air produit par le ventilateur (9) peut être soufflé par l'intermédiaire du canal d'aération (6) et de l'ouverture de fond de corps (7) dans le corps de barbecue, d'où l'air s'écoule par l'intermédiaire des orifices de passage d'air (16) et le cas échéant également des orifices de sortie d'air (17) vers le charbon de bois (27) brûlant.

14. Barbecue à charbon selon la revendication 13, **caractérisé en ce que** dans une double fonction, le canal d'aération (6) constitue en même temps un canal de nettoyage (6) de telle sorte que, par l'intermédiaire de l'ouverture de fond de corps (7) et du canal d'aération (6), lorsque le ventilateur (9) est démonté, des matières résiduelles (32) présentes dans le corps de barbecue (1) peuvent être évacuées, en pouvant être basculées de préférence de la plaque de montage (2) soulevée dans la cuvette de corps se terminant en forme d'entonnoir vers l'ouverture de fond de corps (7).

15. Barbecue à charbon selon la revendication 13 ou 14, **caractérisé en ce que** le corps de barbecue (1) et la plaque de montage (2) sont réalisés de telle sorte que la plaque de montage (2) est adjacente aux parois de corps (4) par complémentarité de forme ainsi que de façon substantiellement étanche à l'air.

16. Barbecue à charbon selon l'une quelconque des revendications 13 à 15, **caractérisé en ce que** la plaque de montage (2) est maintenue à l'état inséré dans le corps de barbecue (1) au moyen d'écarteurs (10), à une distance définie par rapport à la paroi de fond de corps (5).

17. Barbecue à charbon selon l'une quelconque des revendications 13 à 16, **caractérisé en ce que** des poignées de support (11) sont disposées sur le côté supérieur de la plaque de montage (2).
